# FASCICULE DE BREVET EUROPEEN

(11) **EP 3 610 616 B1**
(45) Date de publication et mention de la délivrance du brevet: **20.01.2021**
(21) Numéro de dépôt: 18715748.2
(22) Date de dépôt: 11.04.2018
(51) Int. Cl.: H04L 25/02, H04L 25/49

(54) **SYSTÈME COMPORTANT UNE BAIE ET UN MODULE REMPLAÇABLE EN LIGNE**
SYSTEM MIT EINEM LEITERPLATTENTRÄGER UND EINEM AUSWECHSELBAREN MODUL
SYSTEM COMPRISING A RACK AND A LINE REPLACEABLE MODUL

(30) Priorité: 12.04.2017 FR 1753231
(43) Date de publication de la demande: 19.02.2020
(73) Titulaire: Safran Electronics & Defense, 75015 Paris (FR); Safran Electrical & Power, 31702 Blagnac Cedex (FR)
(72) Inventeur: GUILLOT, François, 75015 Paris (FR); BLINEAU, Jean-Marc, 31702 Blagnac cedex (FR); AVIGNON, Philippe, 31702 Blagnac cedex (FR); ROQUES, Serge, 31702 Blagnac cedex (FR); ALBERO, Franck, 31702 Blagnac cedex (FR)
(74) Mandataire: Lavaud, Thomas
(86) Numéro de dépôt international: PCT/EP2018/059332
(87) Numéro de publication internationale: WO 2018/189264

(56) Documents cités:
- EP-A1- 2 114 019
- WO-A1-2007/104365
- FR-A1- 2 783 392
- GB-A- 2 211 360
- US-A1- 2012 326 657
- US-B1- 6 173 899

## Description

L'invention concerne le domaine des systèmes comprenant une baie et un module remplaçable en ligne.

### ARRIERE PLAN DE L'INVENTION

Dans de nombreux domaines industriels, et notamment dans le domaine de l'aéronautique, les concepteurs de systèmes électriques intègrent fréquemment dans les systèmes électriques des LRMs (pour *Line Replaceable Modules,* en anglais, que l'on traduit ici par « modules remplaçables en ligne »). Plusieurs modules remplaçables en ligne sont ainsi regroupés dans des baies (ou des *racks*) pour former des structures centralisées et modulaires.

L'utilisation de modules remplaçables en ligne présente de nombreux avantages. L'utilisation de modules remplaçables en ligne permet notamment de mutualiser certaines fonctions associées au fonctionnement desdits modules remplaçables en ligne : alimentation, communication, refroidissement, etc. L'utilisation de modules remplaçables en ligne permet aussi de fournir une modularité importante, de faciliter les opérations de maintenance et de remplacement des modules remplaçables en ligne et, bien sûr, de réduire les coûts associés aux modules remplaçables en ligne (coûts de développement, de fabrication, de test, de certification, etc.).

En phase de fabrication d'un module remplaçable en ligne, on cherche à faciliter la mise en œuvre de fonctions d'autotest du module remplaçable en ligne, qui doivent être suffisamment couvrantes et automatisées. On cherche aussi à faciliter le téléchargement de configurations logicielles. On cherche en outre à limiter le risque de détérioration de la connectique (qui est testée par ailleurs par des moyens de vérification simples des équipotentielles). Les broches d'un connecteur peuvent notamment être tordues au moment du raccordement du module remplaçable en ligne ou bien lors d'une chute du module remplaçable en ligne.

Il convient donc d'éliminer les opérations manuelles pour lancer les fonctions d'autotest et pour télécharger les configurations logicielles. Il convient aussi, au cours de la mise en œuvre des fonctions d'autotest, d'être en mesure de vérifier l'état opérationnel du module remplaçable en ligne dans son intégralité. On doit par ailleurs pouvoir télécharger les fonctionnalités de base, et pouvoir les tester sans interférer avec les requêtes précédentes.

En phase de stockage, le module remplaçable en ligne doit pouvoir être conservé sans dégradation pendant parfois plusieurs années, tout en permettant, à tout moment, un téléchargement d'une nouvelle configuration logicielle répondant aux besoins de l'aéronef.

Il convient donc à nouveau d'éliminer les opérations manuelles pour télécharger les configurations logicielles. Il convient aussi de protéger le module remplaçable en ligne contre l'humidité, les poussières et les agressions mécaniques telles que les chocs. Il convient de plus de maintenir les performances des composants électroniques du module remplaçable en ligne en stockage de longue durée (parfois pendant plusieurs années). On doit aussi pouvoir vérifier l'état opérationnel du module remplaçable en ligne dans son intégralité. On doit en outre pouvoir télécharger de nouvelles configurations logicielles et de nouvelles fonctionnalités, et être en mesure de les tester sans interférer avec les requêtes précédentes. On doit enfin pouvoir conserver la navigabilité d'un module remplaçable en ligne après qu'il ait été reconfiguré, c'est à dire ne pas remettre en cause sa certification à chaque reconfiguration.

En phase opérationnelle, le module remplaçable en ligne doit pouvoir s'autotester régulièrement et doit permettre le téléchargement de nouvelles configurations logicielles.

Il convient donc de pouvoir vérifier l'état opérationnel du module remplaçable en ligne dans son intégralité. On doit en outre pouvoir télécharger de nouvelles configurations logicielles et de nouvelles fonctionnalités, et être en mesure de les tester sans interférer avec les requêtes précédentes. Les fonctions d'autotest intégrées doivent couvrir les évolutions d'applicatifs qui seront téléchargés directement sur l'aéronef. On doit aussi conserver la compatibilité du module remplaçable en ligne aux exigences relatives à la compatibilité électromagnétique et à la foudre. On connaît des baies avioniques accueillant des modules remplaçable en ligne dans des emplacement prévus à cet effet. Sur ce point, il est fait référence aux documents FR 2 783 392 A1 et GB 2 211 360 A.

Il est également connu d'échanger d'une manière bidirectionnelle des données par couplage inductif entre un terminal et une carte transpondeur ainsi que la téléalimentation du transpondeur à travers le même couplage. Référence est fait aux documents EP 2 114 019 A1, US 6 173 899 B1 ainsi que WO 2007/104365 A1.

### OBJET DE L'INVENTION

L'invention a pour objet un système comportant une baie et un module remplaçable en ligne, qui répond aux exigences listées ci-dessus.

### RESUME DE L'INVENTION

En vue de la réalisation de ce but, on propose un système comportant une baie et au moins un module remplaçable en ligne, la baie comprenant un emplacement pour accueillir le module remplaçable en ligne, la baie comprenant en outre un circuit de transmission primaire comportant une antenne primaire, des composants d'émission primaires agencés pour générer une puissance émise contenant des données montantes, et des composants de réception primaires agencés pour recevoir des données descendantes, le module remplaçable en ligne comprenant un circuit de transmission secondaire comportant une antenne secondaire, des composants de réception secondaires agencés pour recevoir la puissance émise et les données montantes, et des composants d'émission secondaires agencés pour générer les données descendantes, la puissance émise, les données montantes et les données descendantes étant transmises via un même couplage entre l'antenne primaire et l'antenne secondaire.

Le système selon l'invention permet donc, au cours des phases qui viennent d'être décrites, de télécharger de nouvelles configurations logicielles et de mettre sous tension des composants du module remplaçable en ligne sans qu'il soit nécessaire d'ouvrir le module remplaçable en ligne ou de le connecter à un équipement externe via sa connectique.

Le module remplaçable en ligne peut par ailleurs être emballé dans une enveloppe de protection scellée, en particulier au cours de la phase de stockage. La transmission de puissance et les communications sont réalisées au travers de l'enveloppe de protection, sans qu'il ne soit nécessaire d'ouvrir celle-ci. Le module remplaçable en ligne est ainsi protégé des agressions externes.

On propose de plus un procédé de stockage d'un module remplaçable en ligne dans une baie du système qui vient d'être décrit, le procédé de stockage comportant les étapes :
- d'emballer le module remplaçable en ligne dans une enveloppe de protection étanche et électriquement isolante ;
- de sceller l'enveloppe de protection ;
- de positionner le module remplaçable en ligne dans l'emplacement de la baie.

On propose en outre un module remplaçable en ligne comprenant un circuit de transmission secondaire comprenant une antenne secondaire, des composants de réception secondaires agencés pour recevoir une puissance émise et des données montantes contenues dans la puissance émise, et des composants d'émission secondaires agencés pour générer des données descendantes, le module remplaçable en ligne étant agencé pour être positionné dans l'emplacement de la baie du système qui vient d'être décrit.

On propose enfin une baie avionique comportant un caisson et une pluralité de modules remplaçables en ligne tels que celui qui vient d'être décrit, la baie avionique comportant un élément électriquement conducteur positionné au regard des modules remplaçables en ligne pour rendre inopérantes les antennes secondaires des modules remplaçables en ligne.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un circuit de transmission primaire d'une baie (ou circuit primaire) et un circuit de transmission secondaire d'un module remplaçable en ligne (ou circuit secondaire) d'un système selon l'invention ;
- la figure 2 représente le circuit primaire ;
- la figure 3 représente des données montantes transmises au circuit secondaire par le circuit primaire ;
- la figure 4 représente le circuit secondaire.

### DESCRIPTION DETAILLEE DE L'INVENTION

L'invention est ici illustrée dans une situation où une pluralité de modules remplaçables en ligne sont stockés, en phase de stockage, dans une baie de stockage. Les modules remplaçables en ligne sont chacun destinés à être intégrés, à l'issue de la phase de stockage, dans un système embarqué d'un aéronef.

La baie de stockage comporte une pluralité d'emplacements destinés à accueillir chacun un module remplaçable en ligne.

Chaque emplacement de la baie de stockage comporte un circuit de transmission primaire appelé ici « circuit primaire ». Chaque module remplaçable en ligne comporte un circuit de transmission secondaire appelé ici « circuit secondaire ».

Le circuit primaire d'un emplacement de la baie de stockage et le circuit secondaire du module remplaçable en ligne positionné dans ledit emplacement sont agencés pour mettre en œuvre, entre ledit emplacement et le module remplaçable en ligne, une transmission de puissance, une communication montante et une communication descendante.

La transmission de puissance est une émission à basse fréquence f0 d'une puissance émise générée par le circuit primaire à destination du circuit secondaire.

La communication montante est une transmission à basse fréquence f0 de données montantes générées par le circuit primaire à destination du circuit secondaire.

Le débit des données montantes dans la communication montante est un débit bas compris entre 100kb/s et 1Mb/s.

La communication descendante est une transmission à haute fréquence f1 de données descendantes générées par le circuit secondaire à destination du circuit primaire.

Le débit des données descendantes dans la communication descendante est un débit haut, supérieur au débit bas et compris entre 10Mb/s et 100Mb/s.

Le circuit primaire comporte une antenne primaire, et le circuit secondaire comporte une antenne secondaire.

La transmission de puissance, la communication montante et la communication descendante sont réalisées via un même couplage électromagnétique entre l'antenne primaire et l'antenne secondaire. Le couplage électromagnétique est en l'occurrence un couplage inductif. Le couplage inductif nécessite une certaine proximité entre l'antenne primaire et l'antenne secondaire. Avantageusement, l'antenne primaire et l'antenne secondaire sont situées en face l'une de l'autre et à une distance comprise entre 0,1cm et 20cm.

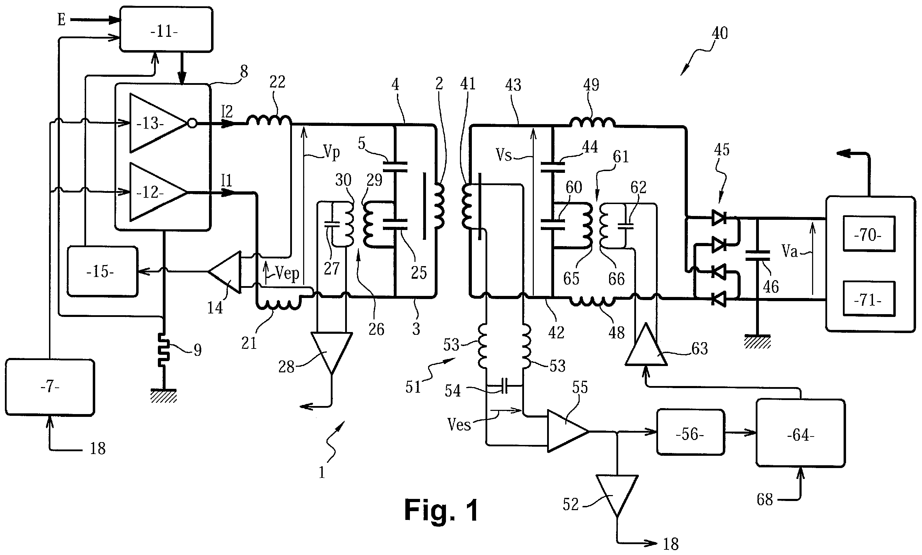

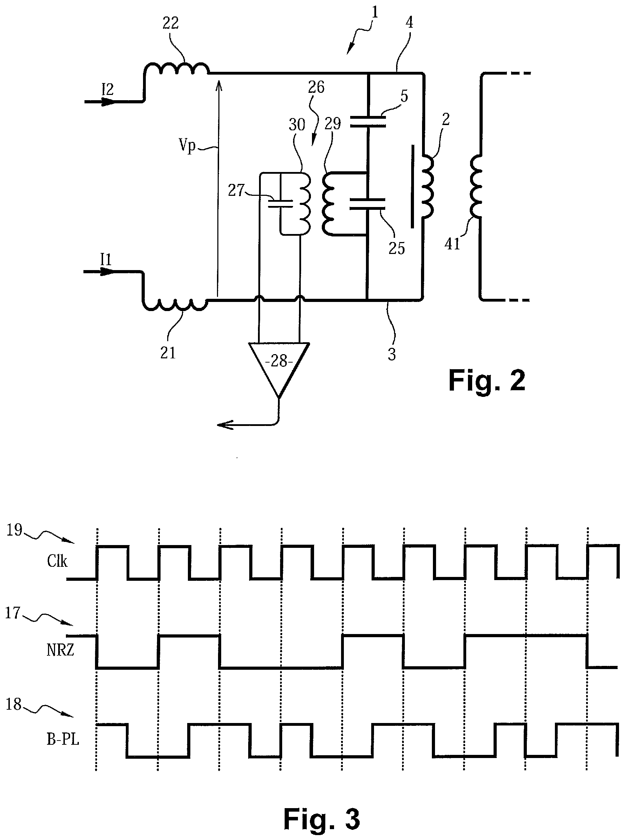

En référence aux figures 1 et 2, le circuit primaire 1 comporte tout d'abord l'antenne primaire qui est ici un enroulement de fil conducteur présentant une première inductance primaire 2. La première inductance primaire 2 comporte deux bornes dont l'une est reliée à un premier conducteur primaire 3 et l'autre est reliée à un deuxième conducteur primaire 4.

Une première capacité primaire 5 est montée en parallèle de la première inductance primaire 2. La valeur de la première inductance primaire 2 et la valeur de la première capacité primaire 5 sont choisies pour que la première inductance primaire 2 et la première capacité primaire 5 forment un premier circuit résonant primaire à la fréquence basse f0.

Pour générer la puissance émise et les données montantes, le circuit primaire 1 comporte des composants d'émission primaires comprenant ici un générateur Biphasé L 7, un pont de puissance 8, un capteur de courant 9, un capteur de tension et un module d'asservissement primaire 11.

Le pont de puissance 8 comporte un amplificateur non inverseur 12 dont une sortie est connectée au premier conducteur primaire 3, et un amplificateur inverseur 13 dont une sortie est connectée au deuxième conducteur primaire 4.

Le capteur de tension comporte des composants d'acquisition 14 et des composants de mesure 15.

En référence à la figure 3, des données montantes 17 codées en NRZ sont transmises au générateur Biphasé L 7 qui transforme les données montantes 17 codées en NRZ en données montantes 18 codées en Biphasé L. Le signal CLK est un signal d'horloge 19 qui cadence les données montantes 17 codées en NRZ et les données montantes 18 codées en Biphasé L.

Les données montantes 18 codées en Biphasé L sont les données montantes à basse fréquence f0 transmises par le circuit primaire 1 au circuit secondaire dans la communication montante.

Les données montantes 18 sont transmises à l'amplificateur non inverseur 12 et à l'amplificateur inverseur 13.

Lorsqu'une donnée montante 18 correspond à un état bas en NRZ, l'amplificateur non inverseur 12 génère dans le premier conducteur primaire 3 un premier courant primaire I1 selon une fréquence porteuse égale à la fréquence basse f0.

Lorsqu'une donnée montante 18 correspond à un état haut en NRZ, l'amplificateur inverseur 13 génère dans le deuxième conducteur primaire 4 un deuxième courant primaire I2 selon une fréquence porteuse égale à la fréquence basse f0.

Le deuxième courant primaire I2 est déphasé de 180° par rapport au premier courant primaire I1, et est donc en inversion de phase par rapport au premier courant primaire I1.

Le premier circuit résonant primaire permet de maximiser la tension primaire Vp générée par le premier courant primaire I1 et le deuxième courant primaire I2 aux bornes du premier circuit résonant primaire.

La tension primaire Vp, le premier courant primaire Il et le deuxième courant primaire I2 forment donc la puissance émise qui est transmise au circuit secondaire via le couplage inductif.

On note que l'utilisation du codage Biphasé L permet d'obtenir une puissance émise de composante moyenne nulle, ce qui permet de transmettre plus efficacement la puissance émise via le couplage inductif entre l'antenne primaire et l'antenne secondaire.

La transmission de puissance et la communication montante utilisent donc les mêmes signaux électriques montants : les données montantes sont contenues dans la puissance émise.

Le capteur de courant 9 mesure le courant consommé par le pont de puissance 8 pour générer le premier courant primaire I1 et le deuxième courant primaire I2. Les mesures du courant sont acquises par le module d'asservissement primaire 11.

Les composants d'acquisition 14 du capteur de tension acquièrent une tension d'excitation primaire Vep, égale à la tension primaire Vp aux bornes du premier circuit résonant primaire. Les composants de mesure 15 du capteur de tension mesurent le niveau de la tension d'excitation primaire Vep et le transmettent au module d'asservissement primaire 11.

Outre les mesures du courant consommé par le pont de puissance 8 et de la tension d'excitation primaire Vep, le module d'asservissement primaire 11 reçoit l'énergie E nécessaire au fonctionnement du pont de puissance 8.

Le module d'asservissement primaire 11 met ainsi en œuvre une première boucle d'asservissement dans le circuit primaire 1, pour définir les points de fonctionnement de l'amplificateur non inverseur 12 et de l'amplificateur inverseur 13.

Le circuit primaire 1 comporte en outre une première inductance de filtrage primaire 21 montée sur le premier conducteur primaire 3 et une deuxième inductance de filtrage primaire 22 montée sur le deuxième conducteur primaire 4. La première inductance de filtrage primaire 21 et la deuxième inductance de filtrage primaire 22 réalisent une isolation haute fréquence, de sorte que des composantes à haute fréquence f1 provenant de l'antenne primaire (et de la communication descendante) ne perturbent pas le fonctionnement du pont de puissance 8 et des composants en amont du pont de puissance 8 (c'est à dire des composants situés à gauche du pont de puissance 8 sur la figure 1).

Pour recevoir les données descendantes, le circuit primaire 1 comporte des composants de réception primaires comprenant une deuxième capacité primaire 25, un transformateur primaire 26, une troisième capacité primaire 27 et un démodulateur primaire 28.

Le transformateur primaire 26 comporte un premier enroulement primaire 29 et un deuxième enroulement primaire 30.

La deuxième capacité primaire 25 est montée en série avec la première capacité primaire 5. Le premier enroulement primaire 29 est connecté en parallèle de la deuxième capacité primaire 25. La troisième capacité primaire 27 est montée en parallèle du deuxième enroulement primaire 30.

Les valeurs d'inductance du premier enroulement primaire 29, du deuxième enroulement primaire 30, et les valeurs de la deuxième capacité primaire 25 et de la troisième capacité primaire 27 sont choisies pour que ces composants forment un deuxième circuit résonant primaire à la fréquence haute f1.

Le démodulateur primaire 28 est monté en parallèle du deuxième enroulement primaire 30. Le démodulateur primaire 28 est agencé pour démoduler des signaux à haute fréquence f1. Le démodulateur primaire 28 extrait de la tension aux bornes du deuxième enroulement primaire 30 et de la troisième capacité primaire 27 les données descendantes.

Le deuxième circuit résonant primaire permet d'optimiser la réception des données descendantes à haute fréquence f1 émises par le circuit secondaire dans la communication descendante.

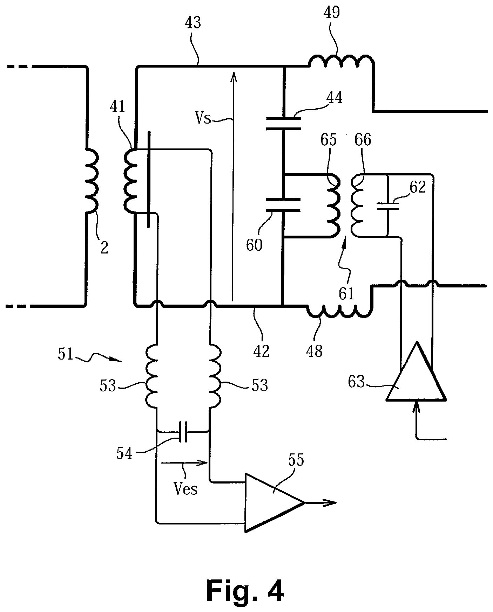

En référence aux figures 1 et 4, le circuit secondaire 40 comporte tout d'abord l'antenne secondaire qui est ici un enroulement de fil conducteur présentant une première inductance secondaire 41. La première inductance secondaire 41 comporte deux bornes dont l'une est reliée à un premier conducteur secondaire 42 et l'autre est reliée à un deuxième conducteur secondaire 43.

Une première capacité secondaire 44 est montée en parallèle de la première inductance secondaire 41. La valeur de la première inductance secondaire 41 et la valeur de la première capacité secondaire 44 sont choisies pour que la première inductance secondaire 41 et la première capacité secondaire 44 forment un premier circuit résonant secondaire à la fréquence basse f0.

L'utilisation du premier circuit résonant secondaire permet de maximiser la tension secondaire Vs aux bornes du premier circuit résonant secondaire. La tension secondaire Vs est générée, via le couplage inductif, par la puissance émise par le circuit primaire 1.

Le couplage inductif, et donc le réglage du premier circuit résonant primaire et du premier circuit résonant secondaire, est optimisé pour maximiser la tension secondaire Vs et pour assurer une bonne qualité de réception des données montantes et descendantes.

Le circuit secondaire 40 comporte des composants de réception secondaires pour recevoir la puissance émise et les données montantes.

Pour recevoir la puissance émise, les composants de réception secondaires comprennent quatre diodes constituant un pont de diodes 45 formant un redresseur double alternance.

Une première capacité de filtrage 46 est montée en sortie et en parallèle du pont de diodes 45.

Le pont de diodes 45 redresse la tension secondaire Vs, qui est une tension alternative, de sorte qu'une tension d'alimentation Va aux bornes de la première capacité de filtrage 46 soit une tension continue.

Le circuit secondaire 40 comporte de plus une première inductance de filtrage secondaire 48 montée sur le premier conducteur secondaire 42 et une deuxième inductance de filtrage secondaire 49 montée sur le deuxième conducteur secondaire 43. La première inductance de filtrage secondaire 48 et la deuxième inductance de filtrage secondaire 49 réalisent une isolation haute fréquence, de sorte que des composantes à haute fréquence f1 provenant de la communication descendante ne perturbent pas le fonctionnement du pont de diodes 45 et des composants en aval du pont de diode (c'est à dire des composants situés à droite du pont de diodes 45 sur la figure 1).

Pour recevoir les données montantes transmises par le circuit primaire 1, les composants de réception secondaires comprennent des composants de filtrage 51, un capteur de tension et un démodulateur secondaire 52.

Les composants de filtrage 51 comportent deux inductances de filtrage 53 connectées chacune à une borne distincte de la première inductance secondaire 41, et une deuxième capacité de filtrage 54 montée en parallèle de la première inductance secondaire 41.

Le capteur de tension comporte des composants d'acquisition 55 et des composants de mesure 56.

Les deux inductances de filtrage 53 et la deuxième capacité de filtrage 54 éliminent les composantes à haute fréquence provenant de la communication descendante.

Les composants d'acquisition 55 du capteur de tension acquièrent une tension d'excitation secondaire Ves aux bornes de la deuxième capacité de filtrage 54.

Le démodulateur secondaire 52 est connecté en sortie des composants d'acquisition 55.

Le démodulateur secondaire 52 est agencé pour démoduler des signaux à basse fréquence f0. Le démodulateur secondaire 52 extrait les données montantes 18 de la tension d'excitation secondaire Ves.

Les composants de mesure 56 du capteur de tension, quant à eux, mesurent le niveau de la tension d'excitation secondaire Ves.

Pour transmettre les données descendantes au circuit primaire 1, le circuit secondaire 40 comporte des composants d'émission secondaires comprenant ici une deuxième capacité secondaire 60, un transformateur secondaire 61, une troisième capacité secondaire 62, un émetteur 63 et un module d'asservissement secondaire 64.

Le transformateur secondaire 61 comporte un premier enroulement secondaire 65 et un deuxième enroulement secondaire 66.

La deuxième capacité secondaire 60 est montée en série avec la première capacité secondaire 44. Le premier enroulement secondaire 65 est connecté en parallèle de la deuxième capacité secondaire 60. La troisième capacité secondaire 62 est montée en parallèle du deuxième enroulement secondaire 66.

Les valeurs d'inductance du premier enroulement secondaire 65, du deuxième enroulement secondaire 66, et les valeurs de la deuxième capacité secondaire 60 et de la troisième capacité secondaire 62 sont choisies pour que ces composants forment un deuxième circuit résonant secondaire à la fréquence haute f1.

Les données descendantes 68 sont reçues par le module d'asservissement secondaire 64. Le module d'asservissement secondaire 64 les transmet à l'émetteur 63 qui crée un courant modulé portant les données descendantes 68.

Les données descendantes 68 sont injectées dans la tension secondaire Vs aux bornes du premier circuit résonant secondaire via le transformateur secondaire 61. La tension secondaire Vs est donc modulée en fonction des données descendantes 68.

Grâce au couplage inductif, la modulation de la tension secondaire Vs module la tension primaire Vp, et les données descendantes 68 sont récupérées par le circuit primaire 1 via le transformateur primaire 26.

Le module d'asservissement secondaire 64 reçoit les mesures du niveau de la tension d'excitation secondaire Ves. Le module d'asservissement secondaire 64 inclut, dans les données descendantes 68, les mesures du niveau de la tension d'excitation secondaire Ves.

Ainsi, une deuxième boucle d'asservissement est mise en œuvre par le circuit primaire 1 et par le circuit secondaire 40. Lorsque le circuit primaire 1 reçoit les mesures du niveau de la tension d'excitation secondaire Ves contenues dans les données descendantes 68, le circuit primaire 1 adapte la puissance émise pour que le niveau de la tension secondaire Vs, dont le niveau de la tension d'excitation secondaire Ves est une image, corresponde précisément à la valeur attendue.

On note que, au moment où le module remplaçable en ligne est positionné dans l'emplacement de la baie de stockage, la modification du courant consommé par le pont de puissance 8 du circuit primaire 1 pour que la tension secondaire Vs corresponde à la valeur attendue peut être utilisée pour détecter la présence du module remplaçable en ligne. Le système est prévu pour un fonctionnement à minima dès la réception du plus petit signal d'excitation, c'est à dire quand le circuit primaire 1 est dans un mode de repos, en attente du positionnement dans l'emplacement du module remplaçable en ligne.

Outre le circuit secondaire 40 qui vient d'être décrit, le module remplaçable en ligne comporte un composant de traitement, par exemple un microcontrôleur ou un FPGA ou un processeur. Le composant de traitement est agencé notamment pour exécuter des instructions d'un logiciel qu'il convient de télécharger dans le composant de traitement.

Le module remplaçable en ligne comporte de plus des composants de téléchargement qui permettent de télécharger le logiciel dans le composant de traitement.

Le module remplaçable en ligne comporte en outre des composants d'alimentation destinés à alimenter l'ensemble des composants du module remplaçable en ligne. Les composants d'alimentation comportent notamment un convertisseur 70 et un composant de stockage 71 (visibles sur la figure 1).

Le module remplaçable en ligne comprend aussi des composants de protection grâce auxquels le module remplaçable en ligne est conforme aux exigences de compatibilité électromagnétique et de foudre spécifiées par le systémier ou par le fabricant de l'aéronef.

Parmi les composants qui viennent d'être cités, on trouve des condensateurs électrochimiques.

La tension d'alimentation Va aux bornes de la première capacité de filtrage 46 est convertie en une tension de stockage par le convertisseur 70. La tension de stockage 70 est appliquée aux bornes du composant de stockage 71 qui stocke la puissance émise reçue par le circuit secondaire 40.

Une énergie stockée est ainsi disponible pendant le stockage du module remplaçable en ligne, alors que celui-ci n'est connecté à aucune source d'énergie autre que le circuit primaire 1.

L'énergie stockée peut être utilisée pour alimenter les composants de téléchargement et le composant de traitement. Les données montantes peuvent alors contenir une configuration logicielle, qui sera téléchargée dans le composant de traitement grâce aux composants de téléchargement.

L'énergie stockée peut aussi être utilisée pour alimenter des composants quelconques du module remplaçable en ligne pour établir une communication montante ou une communication descendante avec le circuit primaire.

L'énergie stockée peut aussi être utilisée pour mettre sous tension les condensateurs électrochimiques. On évite ainsi que ceux-ci se dégradent en restant longtemps sans être sous tension.

Avantageusement, le module remplaçable en ligne est équipé d'une étiquette électronique de type RFID (pour *Radio Frequency Identification*)*,* qui permet d'identifier le module remplaçable en ligne. L'étiquette électronique a besoin d'être alimentée par une source d'énergie autonome lorsqu'il est nécessaire d'embarquer des fonctionnalités évoluées. La source d'énergie autonome comporte ici des condensateurs. Ces condensateurs sont eux-mêmes chargés par l'énergie stockée dans le composant de stockage 71. On obtient ainsi une alternative intéressante à l'utilisation de piles, dont la gestion et le maintien opérationnel sont sources de difficultés. Le module remplaçable en ligne peut ainsi être interrogé à distance par un lecteur conventionnel RFID, sans présenter l'inconvénient du maintien de ces piles.

Avant de positionner le module remplaçable en ligne dans l'emplacement de la baie, le module remplaçable en ligne est emballé dans une enveloppe de protection étanche et électriquement isolante. L'enveloppe de protection est alors scellée. Le module remplaçable en ligne est ainsi protégé des poussières, des gaz oxydants et des agressions mécaniques. Le scellage de l'enveloppe de protection garantit que l'enveloppe de protection n'a pas été ouverte.

L'enveloppe de protection est mise en place dès les tests de vérification des équipotentielles réalisés au cours de la phase de fabrication.

Au cours de la phase de stockage, une configuration logicielle peut être téléchargée dans le module remplaçable en ligne en utilisant les données montantes, au travers de l'enveloppe de protection et grâce au couplage inductif.

De même, les condensateurs du module remplaçable en ligne peuvent être mis sous tension au travers de l'enveloppe de protection en utilisant la puissance émise.

L'enveloppe de protection n'est retirée que lorsque le module remplaçable en ligne sort de la phase de stockage pour être monté sur un aéronef. Ainsi, le module remplaçable en ligne est parfaitement protégé depuis la phase de fabrication jusqu'au moment où il est monté sur l'aéronef, pendant une durée longue de plusieurs années parfois.

Lorsque le module remplaçable en ligne est monté sur l'aéronef, il est positionné dans une baie avionique avec d'autres modules remplaçables en ligne. Outre les modules remplaçables en ligne, la baie avionique comporte un caisson comprenant des emplacements pour accueillir les modules remplaçables en ligne. Les emplacements de la baie avionique ne comprennent pas de circuit primaire. Au contraire, le caisson comporte un élément électriquement conducteur, en l'occurrence un rail métallique. Le rail métallique s'étend au regard des antennes secondaires des modules remplaçables en ligne, de manière à créer un écran électromagnétique et à rendre les antennes secondaires inopérantes. On évite ainsi tout risque de piratage des modules remplaçables en ligne, et on évite de remettre en cause la conformité des modules remplaçables en ligne aux exigences de compatibilité électromagnétique.

Bien entendu, l'invention n'est pas limitée au mode de réalisation décrit mais englobe toute variante entrant dans le champ de l'invention telle que définie par les revendications.

Bien que l'on ait indiqué ici que chaque emplacement de la baie de stockage, qui accueille un unique module remplaçable en ligne, comporte un circuit primaire comprenant une antenne primaire, il est possible d'utiliser une même antenne primaire pour transmettre de la puissance et échanger des données avec plusieurs modules remplaçables en ligne.

L'invention ne s'applique pas uniquement à une phase de stockage du module remplaçable en ligne, mais peut être mise en œuvre au cours d'une phase de fabrication ou d'une phase opérationnelle. La baie n'est alors plus une baie de stockage, mais une baie de test (en phase de fabrication) ou une baie avionique (en phase opérationnelle).

## Revendications

1. Système comportant une baie et au moins un module remplaçable en ligne, la baie comprenant un emplacement pour accueillir le module remplaçable en ligne, **caractérisé en ce que** la baie comprend en outre un circuit de transmission primaire (1) comportant une antenne primaire (2), des composants d'émission primaires (7, 8) agencés pour générer une puissance émise contenant des données montantes (18), et des composants de réception primaires (26, 27, 28) agencés pour recevoir des données descendantes (68), le module remplaçable en ligne comprenant un circuit de transmission secondaire (40) comportant une antenne secondaire (41), des composants de réception secondaires (45, 51, 54, 52) agencés pour recevoir la puissance émise et les données montantes, et des composants d'émission secondaires (61, 62, 63) agencés pour générer les données descendantes, la puissance émise, les données montantes et les données descendantes étant transmises via un même couplage entre l'antenne primaire (2) et l'antenne secondaire.

2. Système selon la revendication 1, dans lequel les composants d'émission primaires comprennent un générateur Biphasé L (7).

3. Système selon la revendication 2, dans lequel les composants d'émission primaires comprennent en outre un amplificateur non inverseur (12) et un amplificateur inverseur (13) reliés au générateur Biphasé L (7), une sortie de l'amplificateur non inverseur (12) étant connectée à un premier conducteur primaire (3) relié à une première borne de l'antenne primaire, une sortie de l'amplificateur inverseur (13) étant connectée à un deuxième conducteur primaire (4) relié à une deuxième borne de l'antenne primaire.

4. Système selon la revendication 1, dans lequel le couplage est un couplage inductif.

5. Système selon la revendication 1, dans lequel la puissance émise et les données montantes (18) sont transmises avec un débit bas, et les données descendantes (68) sont transmises avec un débit haut.

6. Système selon la revendication 5, dans lequel le débit bas est compris entre 100kb/s et 1Mb/s, et le débit haut est compris entre 10Mb/s et 100Mb/s.

7. Système selon la revendication 1, dans lequel la puissance émise qui est reçue par le circuit de transmission secondaire (40) est notamment utilisée pour mettre sous tension un condensateur du module remplaçable en ligne.

8. Système selon la revendication 1, dans lequel la puissance émise qui est reçue par le circuit de transmission secondaire (41) est notamment utilisée pour alimenter des composants de téléchargement du module remplaçable en ligne, et dans lequel les données montantes contiennent une configuration logicielle téléchargée dans un composant de traitement du module remplaçable en ligne.

9. Système selon la revendication 1, dans lequel les données descendantes sont utilisées notamment pour asservir une tension primaire (Vp) générée par les composants d'émission primaires.

10. Système selon la revendication 1, dans lequel le module remplaçable en ligne est emballé dans une enveloppe de protection étanche, électriquement isolante et scellée.

11. Procédé de stockage d'un module remplaçable en ligne dans une baie du système selon l'une des revendications précédentes, le procédé de stockage comportant les étapes :
- d'emballer le module remplaçable en ligne dans une enveloppe de protection étanche et électriquement isolante ;
- de sceller l'enveloppe de protection ;
- de positionner le module remplaçable en ligne dans l'emplacement de la baie.

12. Procédé de stockage selon la revendication 11, comportant en outre l'étape de mettre sous tension des condensateurs du module remplaçable en ligne en utilisant la puissance émise.

13. Procédé de stockage selon la revendication 12, comportant en outre l'étape de télécharger une configuration logicielle dans le module remplaçable en ligne en utilisant les données montantes.

14. Module remplaçable en ligne comprenant un circuit de transmission secondaire (40) comprenant une antenne secondaire (41), des composants de réception secondaires agencés pour recevoir une puissance émise et des données montantes contenues dans la puissance émise, et des composants d'émission secondaires agencés pour générer des données descendantes, le module remplaçable en ligne étant agencé pour être positionné dans l'emplacement de la baie du système selon l'une des revendications 1 à 10.

15. Module remplaçable en ligne selon la revendication 14, le module remplaçable en ligne étant emballé dans une enveloppe de protection étanche, électriquement isolante et scellée.

16. Baie avionique comportant un caisson et une pluralité de modules remplaçables en ligne selon la revendication 14, la baie avionique comportant un élément électriquement conducteur positionné au regard des modules remplaçables en ligne pour rendre inopérantes les antennes secondaires des modules remplaçables en ligne.

## Patentansprüche

1. System, umfassend ein Rack und mindestens ein Line-Replaceable-Modul, wobei das Rack einen Steckplatz zur Aufnahme des Line-Replaceable-Moduls umfasst, **dadurch gekennzeichnet, dass** das Rack ferner einen primären Übertragungskreis (1) enthält, der eine primäre Antenne (2), primäre Sendekomponenten (7, 8), die ausgebildet sind, um eine Uplink-Daten (18) enthaltende emittierte Leistung zu erzeugen, und primäre Empfangskomponenten (26, 27, 28) umfasst, die ausgebildet sind, um Downlink-Daten (68) zu empfangen, wobei das Line-Replaceable-Modul einen sekundären Übertragungskreis (40) enthält, der eine sekundäre Antenne (41), sekundäre Empfangskomponenten (45, 51, 54, 52), die ausgebildet sind, um die emittierte Leistung und die Uplink-Daten zu empfangen, und sekundäre Sendekomponenten (61, 62, 63) umfasst, die ausgebildet sind, um die Downlink-Daten zu erzeugen, wobei die emittierte Leistung, die Uplink-Daten und die Downlink-Daten über eine selbe Kopplung zwischen der primären Antenne (2) und der sekundären Antenne übertragen werden.

2. System nach Anspruch 1, bei dem die primären Sendekomponenten einen Zweiphasen-Generator L (7) umfassen.

3. System nach Anspruch 2, bei dem die primären Sendekomponenten ferner einen nicht invertierenden Verstärker (12) und einen invertierenden Verstärker (13) umfassen, die mit dem Zweiphasen-Generator L (7) verbunden sind, wobei ein Ausgang des nicht invertierenden Verstärkers (12) mit einem ersten primären Leiter (3) verbunden ist, der an einen ersten Anschluss der primären Antenne angeschlossen ist, und wobei ein Ausgang des invertierenden Verstärkers (13) mit einem zweiten primären Leiter (4) verbunden ist, der an einen zweiten Anschluss der primären Antenne angeschlossen ist.

4. System nach Anspruch 1, bei dem die Kopplung eine induktive Kopplung ist.

5. System nach Anspruch 1, bei dem die emittierte Leistung und die Uplink-Daten (18) mit einer niedrigen Rate übertragen werden und die Downlink-Daten (68) mit einer hohen Rate übertragen werden.

6. System nach Anspruch 5, bei dem die niedrige Rate zwischen 100kb/s und 1Mb/s und die hohe Rate zwischen 10 Mb/s und 100 Mb/s beträgt.

7. System nach Anspruch 1, bei dem die emittierte Leistung, die von dem sekundären Übertragungskreis (40) empfangen wird, insbesondere verwendet wird, um einen Kondensator des Line-Replaceable-Moduls unter Spannung zu setzen.

8. System nach Anspruch 1, bei dem die emittierte Leistung, die von dem sekundären Übertragungskreis (41) empfangen wird, insbesondere verwendet wird, um Download-Komponenten des Line-Replaceable-Moduls zu speisen, und bei dem die Uplink-Daten eine in eine Verarbeitungskomponente des Line-Replaceable-Moduls heruntergeladene Softwarekonfiguration enthalten.

9. System nach Anspruch 1, bei dem die Downlink-Daten insbesondere verwendet werden, um eine von den primären Sendekomponenten erzeugte primäre Spannung (Vp) zu regeln.

10. System nach Anspruch 1, bei dem das Line-Replaceable-Modul in eine dichte, elektrisch isolierte und versiegelte Schutzumhüllung eingepackt ist.

11. Verfahren zum Aufbewahren eines Line-Replaceable-Moduls in einem Rack des Systems nach einem der vorhergehenden Ansprüche, wobei das Aufbewahrungsverfahren die Schritte umfasst:
- Einpacken des Line-Replaceable-Moduls in eine dichte und elektrisch isolierende Schutzumhüllung;
- Versiegeln der Schutzumhüllung;
- Positionieren des Line-Replaceable-Moduls in dem Steckplatz des Racks.

12. Aufbewahrungsverfahren nach Anspruch 11, ferner umfassend den Schritt des Unter-Spannung-Setzens der Kondensatoren des Line-Replaceable-Moduls unter Verwendung der emittierten Leistung.

13. Aufbewahrungsverfahren nach Anspruch 12, ferner umfassend den Schritt des Herunterladens einer Softwarekonfiguration in das Line-Replaceable-Modul unter Verwendung der Uplink-Daten.

14. Line-Replaceable-Modul, umfassend einen sekundären Übertragungskreis (40), der eine sekundäre Antenne (41), sekundäre Empfangskomponenten, die so ausgebildet sind, dass sie eine emittierte Leistung und in der emittierten Leistung enthaltene Uplink-Daten empfangen, und sekundäre Sendekomponenten umfasst, die so ausgebildet sind, dass sie Downlink-Daten erzeugen, wobei das Line-Replaceable-Modul so ausgebildet ist, dass es in dem Steckplatz des Racks des Systems nach einem der Ansprüche 1 bis 10 positioniert ist.

15. Line-Replaceable-Modul nach Anspruch 14, wobei das Line-Replaceable-Modul in eine dichte, elektrisch isolierte und versiegelte Schutzumhüllung eingepackt ist.

16. Avionik-Rack, umfassend einen Kasten und eine Vielzahl von Line-Replaceable-Modulen nach Anspruch 14, wobei das Avionik-Rack ein elektrisch leitendes Element umfasst, das gegenüber den Line-Replaceable-Modulen positioniert ist, um die sekundären Antennen der Line-Replaceable-Module wirkungslos zu machen.

## Claims

1. A system comprising a rack and at least one line-replaceable module, the rack comprising a slot for accommodating the line-replaceable module, **characterized in that** the rack further comprises a primary transmission circuit (1) comprising a primary antenna (2), primary emission components (7, 8) arranged to generate an emitted power containing uplink data (18), and primary reception components (26, 27, 28) arranged to receive downlink data (68), the line-replaceable module comprising a secondary transmission circuit (40) comprising a secondary antenna (41), secondary reception components (45, 51, 54, 52) arranged to receive the emitted power and the uplink data, and secondary emission components (61, 62, 63) arranged to generate the downlink data, the emitted power, the uplink data and the downlink data being transmitted via one and the same coupling between the primary antenna (2) and the secondary antenna.

2. The system as claimed in claim 1, wherein the primary emission components comprise a two-phase generator L (7) .

3. The system as claimed in claim 2, wherein the primary emission components further comprise a non-inverting amplifier (12) and an inverting amplifier (13) linked to the two-phase generator L (7), an output of the non-inverting amplifier (12) being connected to a first primary conductor (3) linked to a first terminal of the primary antenna, an output of the inverting amplifier (13) being connected to a second primary conductor (4) linked to a second terminal of the primary antenna.

4. The system as claimed in claim 1, wherein the coupling is an inductive coupling.

5. The system as claimed in claim 1, wherein the emitted power and the uplink data (18) are transmitted with a low bit rate, and the downlink data (68) are transmitted with a high bit rate.

6. The system as claimed in claim 5, wherein the low bit rate lies between 100 kb/s and 1 Mb/s, and the high bit rate lies between 10 Mb/s and 100 Mb/s.

7. The system as claimed in claim 1, wherein the emitted power which is received by the secondary transmission circuit (40) is used in particular to power up a capacitor of the line-replaceable module.

8. The system as claimed in claim 1, wherein the emitted power which is received by the secondary transmission circuit (41) is used in particular to power downloading components of the line-replaceable module, and wherein the uplink data contain a software configuration downloaded into a processing component of the line-replaceable module.

9. The system as claimed in claim 1, wherein the downlink data are used in particular to control a primary voltage (Vp) generated by the primary emission components.

10. The system as claimed in claim 1, wherein the line-replaceable module is packaged in a tight, electrically insulating and sealed protective cover.

11. A method for storing a line-replaceable module in a rack of the system as claimed in one of the preceding claims, the storage method comprising the steps:
- of packaging the line-replaceable module in a tight and electrically insulating protective cover;
- of sealing the protective cover;
- of positioning the line-replaceable module in the slot of the rack.

12. The storage method as claimed in claim 11, further comprising the step of powering up of the capacitors of the line-replaceable module by using the emitted power.

13. The storage method as claimed in claim 12, further comprising the step of downloading a software configuration into the line-replaceable module by using the uplink data.

14. A line-replaceable module comprising a secondary transmission circuit (40) comprising a secondary antenna (41), secondary reception components arranged to receive an emitted power and uplink data contained in the emitted power, and secondary emission components arranged to generate downlink data, the line-replaceable module being arranged to be installed in the slot of the rack of the system as claimed in one of claims 1 to 10.

15. The line-replaceable module as claimed in claim 14, the line-replaceable module being packaged in a tight, electrically insulating and sealed protective cover.

16. An avionics rack comprising a box and a plurality of line-replaceable modules as claimed in claim 14, the avionics rack comprising an electrically conductive element positioned with respect to the line-replaceable modules to render the secondary antennas of the line-replaceable modules inoperative.
